Europäisches Patentamt

European Patent Office

Office européen des brevets

(19)

(11) Veröffentlichungsnummer: **0 198 411**
**A2**

## (12) EUROPÄISCHE PATENTANMELDUNG

(21) Anmeldenummer: **86104846.0**

(22) Anmeldetag: **09.04.86**

(51) Int. Cl.⁴: **H 04 M 11/02**

(30) Priorität: **16.04.85 DE 3513699**

(43) Veröffentlichungstag der Anmeldung: **22.10.86**
**Patentblatt 86/43**

(84) Benannte Vertragsstaaten: **AT CH FR GB IT LI SE**

(71) Anmelder: **Dierauf Industrie Elektronik GmbH,
Böttgerstrasse 4, D-8600 Bamberg (DE)**

(72) Erfinder: **Dierauf, Ludwig, Arthur-Landgraf-Strasse 46,
D-8600 Bamberg (DE)**

(74) Vertreter: **Strehl,-Schübel-Hopf,-Groening,-Schulz,
Widenmayerstrasse 17 Postfach 22 03 45,
D-8000 München 22 (DE)**

(54) **Klingelanläutevorrichtung.**

(57) Angegeben wird eine Klingelanläutevorrichtung 1 mit Tasten, die gekennzeichnet ist durch eine alphabetische Tastatur 4, eine numerische Tastatur 5, eine Funktionstastatur 6, ein Buchstabenanzeigefeld 8, ein Nummernanzeigefeld 9, einen elektronischen Namensspeicher und eine elektronische Steuervorrichtung. Die Klingelanläutevorrichtung 1 hat den Vorteil, daß sie weniger Platz beansprucht als übliche Klingelanläuteplatten mit zahlreichen Namensschildern und Klingeltasten. Außerdem ermöglicht die Vorrichtung ein müheloses und rasches Auffinden eines gewünschten Namens.

Die Erfindung betrifft eine Klingelanläutevorrichtung mit Tasten.

Bei großen Klingelanläutevorrichtungen oder -platten, wie sie beispielsweise an Hauseingängen von Wohnblocks vorgesehen sind, bestand bisher zur Installation nur die Möglichkeit, die Namensschilder der Hausbewohner mit den zugehörigen Klingeltastern in entsprechend großen Tableaus entweder in die Haustürelemente oder in das benachbarte Mauerwerk einzubauen. Der bautechnische und montagetechnische Aufwand ist entsprechend hoch.

Daneben haben solche großen Klingelanläuteplatten den Nachteil, daß sie wegen der Vielzahl an Namen für den Benutzer sehr unübersichtlich sind und deshalb das Namensschild bzw. der zugeordnete Klingeltaster des gewünschten Wohnungsinhabers oder -mieters nur nach längerem Suchen aufgefunden werden kann. Eine Suchhilfe durch Einteilen der Namen der Hausbewohner nach Anfangsbuchstaben ist unpraktikabel, da z.B. im Falle eines Mieterwechsels der neue Hausbewohner einen anderen Anfangsbuchstaben in seinem Namen führt als sein Wohnungsvorgänger. Deshalb blieb bisher nur die Möglichkeit, auf den Klingelanläuteplatten die Namensschilder und die Klingeltaster nach Stockwerken oder Gebäudetrakten zu gliedern. Für den Benutzer der Klingelanläuteplatte bleibt dabei aber nach wie vor eine zeitraubende und unter schlechten Lichtverhältnissen recht schwierige Suche nach dem gewünschten Namen.

Der Erfindung liegt die Aufgabe zugrunde, eine Klingelanläutevorrichtung anzugeben, die sehr platzsparend ist und die es - insbesondere auch ungeübten Personen, z.B. Kindern und älteren Leuten - ermöglicht, auf einer Klingelanläuteplatte, der eine Vielzahl von Namen zugeord-

- 2 -

0198411

net ist, auf einfache Weise und in kurzer Zeit einen gewünschten Namen aufzufinden. Außerdem soll die Klingelanläutevorrichtung gewünschtenfalls so ausbildbar sein, daß sie die Übermittlung von Informationen an den Benutzer der Vorrichtung gestattet und/oder diesem Benutzer das Öffnen einer zugehörigen Haustüre erleichtert.

Die Erfindung löst die genannte Aufgabenstellung durch eine Klingelanläutevorrichtung mit Tasten, die gekennzeichnet ist durch

a) eine alphabetische Tastatur,
b) eine numerische Tastatur,
c) eine Funktionstastatur,
d) ein Buchstabenanzeigefeld,
e) ein Nummernanzeigefeld,
f) einen elektronischen Namensspeicher und
g) eine elektronische Steuervorrichtung.

Die erfindungsgemäße Klingelanläutevorrichtung hat den Vorteil, daß sie auch im Falle einer sehr großen Anzahl von gespeicherten Namen das Auffinden eines bestimmten Namens in kürzester Zeit gestattet. Außerdem kann eine Änderung der gespeicherten Namen von dazu autorisierten Personen sehr leicht und rasch vorgenommen werden.

Weitere zweckmäßige Ausgestaltungen der Erfindung sind in den Unteransprüchen 2 bis 4 angegeben.

Nachstehend ist die Erfindung anhand der schematischen Zeichnung eines Ausführungsbeispiels näher beschrieben.

Es zeigen:

Fig. 1 eine Draufsicht auf eine Klingelanläutevorrichtung mit verschiedenen Funktionsfeldern und

0198411

Fig. 2 einen Querschnitt durch die Klingelanläutevorrichtung gemäß Fig. 1 entlang der Schnittlinie A-B.

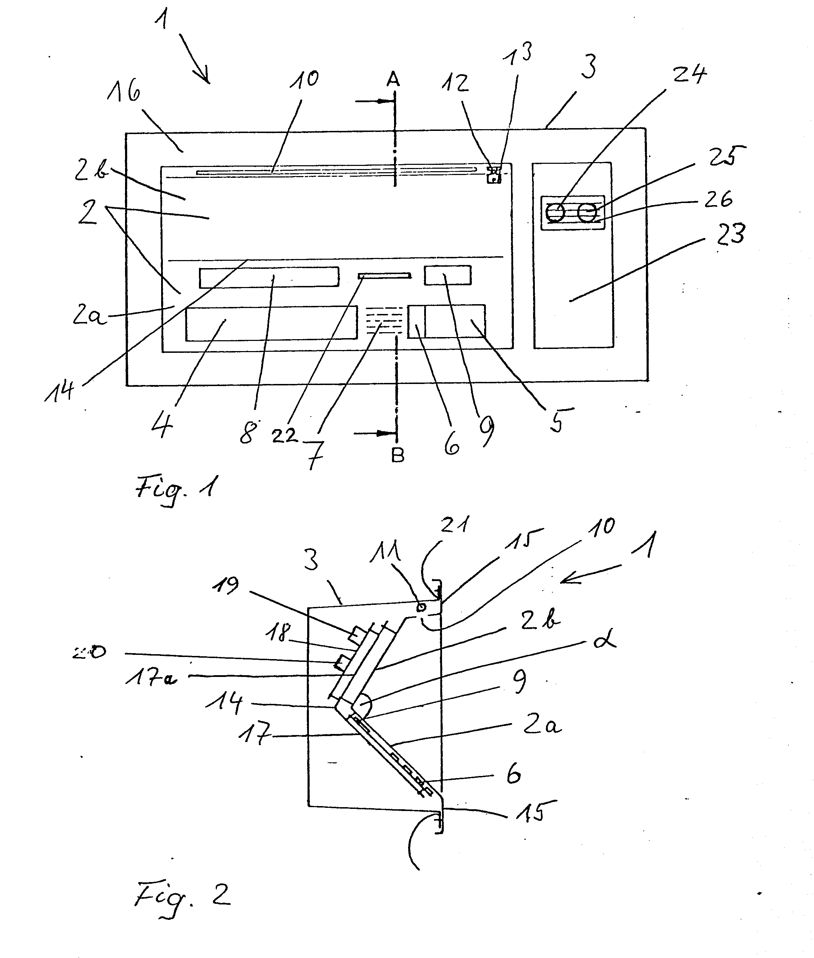

Gemäß der Zeichnung besteht eine Klingelanläutevorrichtung
1 im wesentlichen aus einer Frontplatte 2 (Fig. 1 und 2)
mit damit in Verbindung stehenden Funktionsfeldern, wie
den nachstehend noch erläuterten Tastaturen und Anzeigefeldern, sowie einem in der Draufsicht und in den
Seitenansichten im wesentlichen rechteckigen Gehäuse 3,
das hinter der Frontplatte 2 befestigt ist und dessen
Rückseite abdeckt (Fig. 2). Die Frontplatte 2 und das
Gehäuse 3 bestehen vorzugsweise aus witterungsbeständigem
Kunststoff und können für Auf- oder Unterputzmontage
ausgestaltet sein.

Gemäß Fig. 1 weist die Frontplatte 2 verschiedene
Funktionsfelder auf. Dazu gehören links unten eine
alphabetische Tastatur 4 mit beispielsweise (in der
Zeichnung nicht dargestellten) drei übereinanderliegenden
Tastenreihen. Jede der Taste trägt einen der Buchstaben A
bis Z. Rechts unten ist in der Frontplatte 2 eine
numerische Tastatur 5 vorgesehen, die beispielsweise (in
der Zeichnung nicht dargestellt) drei übereinander angeordnete Reihen mit jeweils drei Tasten (mit den Nummern 1
bis 3 bzw. 4 bis 6 bzw. 7 bis 9) und darunter eine
Einzeltaste (mit der Nummer 0) aufweist.

Zwischen der alphabetischen Tastatur 4 und der numerischen
Tastatur 5 ist unmittelbar neben der letzteren eine
Funktionstastatur 6 angeordnet. Sie umfaßt z.B. (in der
Zeichnung nicht dargestellt) untereinander plaziert eine
Eingabetaste, eine Suchtaste, eine Läuttaste und eine
Codetaste, deren Funktion nachfolgend noch erläutert wird.

Die Tastaturen 4, 5 und 6 sind vorzugsweise als wasserdichte Folientastaturen ausgebildet. Der noch freie Platz auf der Frontplatte 2 zwischen der alphabetischen Tastatur 4 und der Funktionstastatur 6 wird teilweise durch die Aufschrift einer Bedienungsanleitung 7 für die Klingelanläutevorrichtung 1 ausgefüllt.

Über der alphabetischen Tastatur 4 ist ein Buchstabenanzeigefeld 8 und über der numerischen Tastatur 5 ein Nummernanzeigefeld 9 angeordnet. Diese Anzeigenfelder 8, 9 sind z.B. in Form von LCD-Anzeigen ausgebildet.

Die vorgenannten Funktionsfelder, nämlich die alphabetische Tastatur 4, die numerische Tastatur 5, die Funktionstastatur 6, die Bedienungsanleitung 7, das Buchstabenanzeigefeld 8 und das Nummernanzeigefeld 9, befinden sich im wesentlichen auf der unteren Hälfte 2a der Frontplatte 2.

Im oberen Bereich der oberen Hälfte 2b der Frontplatte 2 ist eine über einen wesentlichen Längenabschnitt der Frontplatte 2 sich erstreckende und gegebenenfalls durch eine Schutzplatte aus einem durchsichtigen Material abgedeckte Beleuchtungsöffnung 10 vorgesehen, hinter der eine Beleuchtungsvorrichtung 11 (Fig. 2), z.B. eine Kaltkathoden-Neonröhre, zur vorzugsweise indirekten Beleuchtung der Funktionsfelder auf der Frontplatte 2 bei ungünstigen Tageslichtbedingungen oder bei Nacht installiert ist.

Auf der Frontplatte 2 ist über der numerischen Tastatur 5 neben der Beleuchtungsöffnung 10 ein Schlüsselschalter 12 zur Betätigung mittels eines Schlüssels 13 vorgesehen.

Fig. 2 zeigt, daß die Frontplatte 2 in ihrem Querschnitt mehrfach gewinkelt ausgestaltet ist. Die obere Hälfte 2b der Frontplatte 2 ist entlang eines Längsknicks 14 dieser Platte um etwa 75° in Richtung auf die Vorderseite der unteren Hälfte 2a der Frontplatte 2 abgewinkelt, so daß die beiden Frontplattenhälften 2a, 2b auf ihrer Vorderseite einen Winkel $\alpha$ von etwa 105° einschliessen. Dadurch ergibt sich bei der Anordnung der Frontplatte 2 in dem Gehäuse 3 für den Benutzer der Klingelanläutevorrichtung 1 ein optimaler Blinkwinkel auf die Funktionsfelder in der unteren Hälfte 2a der Frontplatte 2.

Der Randbereich 15 der Frontplatte 2 ist unter Ausbildung einer Rahmenfläche 16 (Fig. 1) in Richtung auf die Rückseite der Frontplatte 2 abgewinkelt. In Gebrauchsstellung der Klingelanläutevorrichtung 1 ist die Rahmenfläche 16 parallel zu oder bündig mit der Mauerfläche angeordnet, in der die Vorrichtung 1 montiert ist.

Im Bereich der Beleuchtungsöffnung 10 ist die Frontplatte 2 in ihrem Querschnitt zusätzlich unter einem Winkel von ca. 50° in Richtung auf die Vorderseite der unteren Hälfte 2a abgewinkelt.

Aus Fig. 2 ist auch ersichtlich, daß auf der Rückseite der unteren Hälfte 2a und der oberen Hälfte 2b der Frontplatte 2 weitere Bauelemente, z.B. eine im gleichen Winkel wie die beiden Frontplattenhälften 2a, 2b gebogene Aluminiumplatte 17, eine Platine 18, ein elektronischer Namensspeicher 19 und eine elektronische Steuervorrichtung 20 angeordnet sind. Die Platine 18 ist an der Aluminiumplatte 17 auf der der Frontplatte 2 abgewandten Seite der Aluminiumplatte 17 an dem oberen Schenkel 17a der Aluminiumplatte 17 montiert, welcher hinter der oberen Hälfte 2b der Frontplatte 2 liegt. Der Namensspeicher 19 und die Steuervorrichtung 20 können auch an einer anderen Stelle der Klingelanläutevorrichtung 1 angeordnet sein. Außerdem können an der Rückseite der Frontplatte 2 noch andere, für den Fachmann selbstverständliche Hilfsvorrichtungen, z.B. (in der Zeichnung nicht dargestellte) Stromversorger und Verstärker, vorgesehen sein.

Die Frontplatte 2 ist mit ihrem Randbereich 15 an dem Rand 21 des Gehäuses 3, z.B. mittels Schrauben, befestigt.

Die Klingelanläutevorrichtung 1 kann gegebenenfalls zusätzlich mit einem Codekartenleser 22 ausgerüstet sein. In diesem Fall ist in der unteren Hälfte 2a der Frontplatte 2, beispielsweise zwischen dem Buchstabenanzeigefeld 8 und dem Nummernanzeigefeld 9, ein Einsteckschlitz des Codekartenlesers 22 zum Einstecken einer Codekarte vorgesehen, wie Fig. 1 erkennen läßt.

Schließlich kann die Klingelanläutevorrichtung 1 gewünschtenfalls zusätzlich durch eine Gegen- oder Wechselsprechvorrichtung 23 ergänzt sein. Diese Sprechvorrichtung 22 ist gemäß Fig. 1 rechts neben der numerischen Tastatur 5 bzw. dem Nummernanzeigefeld 9 bzw. dem Schlüsselschalter 12 angeordnet und weist z.B. in Höhe der oberen Hälfte 2b der Frontplatte 2 nebeneinander einen Lautsprecher 24 und ein Mikrophon 25 hinter schlitzartigen Durchbrechungen 26 der Frontplatte 2 auf. Im Bereich der Sprechvorrichtung 23 ist die Frontplatte 2 nicht unter Ausbildung einer unteren und einer oberen Hälfte abgewinkelt, sondern im wesentlichen mit der Rahmenfläche 16 bündig gestaltet.

Zur Benutzung der Klingelanläutevorrichtung 1 wird zunächst durch eine berechtigte Person mittels des Schlüsselschalters 12 der Namensspeicher 19 freigegeben. Anschließend werden mittels der alphabetischen Tastatur 4 mit Unterstützung durch das Buchstabenanzeigefeld 8 sämtliche Vor- und Zunamen derjenigen Personen, denen die Klingelanläutevorrichtung 1 zugeordnet werden soll, in den Namensspeicher 19 eingegeben. In entsprechender Weise können auch mittels der numerischen Tastatur 5 mit Unterstützung durch das Nummernanzeigefeld 9 dreistellige Wohnungsnummern, welche dem genannten Personennamen entsprechen, eingespeichert werden. Diese Wohnungsnummern können anhand von Stockwerken oder Gebäudeteilen festgelegt werden. Die Eingabe der Namen und Wohnungsnummern geschieht mittels eines speziellen Service-Programms, das dem Fachmann bekannt ist. Nach der Eingabe eines jeden Namens und einer jeden Wohnungsnummer wird jeweils in der Funktionstastatur 6 eine Eingabetaste gedrückt, wodurch die Eingabe quittiert und abgeschlossen wird. Selbstverständlich können gespeicherte Namen und Wohnungsnummern auch wieder gelöscht oder geändert werden.

Nach dem Ende des Einspeicherns der Namen und Wohnungsnummern wird der Speicher durch Betätigen des Schlüsselschalters 12 und Abziehen des Schlüssels 13 blockiert und so gegen Mißbrauch durch unbefugte Personen geschützt.

Nach Abschluß des Speichervorgangs erscheint in dem Buchstabenanzeigefeld 8 die Angabe "Anfangsbuchstabe?", wobei das Fragezeichen rhythmisch blinkt.

Ein Benutzer der Klingelanläutevorrichtung 1 gibt auf der alphabetischen Tastatur 4 den Anfangsbuchstaben des zu suchenden Familiennamens ein. Auf dem Buchstabenanzeigefeld 8 erscheint dann aus dem Namensspeicher 19 der erste Familienname mit dem gewählten Anfangsbuchstaben und dem zugehörigen Vornamen. Gleichzeitig erscheint auf dem Nummernanzeigefeld 9 die zugehörige Wohnungsnummer. Durch wiederholtes Drücken der Suchtaste innerhalb der Funktionstastatur 6 werden sämtliche eingespeicherten Familiennamen mit dem gleichen Anfangsbuchstaben und den jeweils zugehörigen Vornamen abgerufen und auf dem Buchstabenanzeigefeld 8 angezeigt. Entsprechendes gilt für die Wohnungsnummern. Wenn der Benutzer den richtigen Familiennamen gefunden hat, drückt er in der Funktionstastatur 6 eine Läuttaste. Dadurch wird in der zugeordneten Wohnungssprechstelle ein Summer oder eine Glocke betätigt. Der gerufene Bewohner kann gewünschtenfalls über die Sprechvorrichtung 23 mit dem Benutzer der Klingelanläutevorrichtung 1 sprechen und/oder durch eine Türöffnertaste in der Wohnungssprechstelle die Eingangstür des Hauses zur Öffnung freigeben. Die Anzeige des Familiennamens und der Wohnungsnummer auf dem Buchstabenanzeigefeld 8 und dem Nummernanzeigefeld 9 wird entweder nach einer vorgegebenen Zeit oder mit dem Öffnen der Eingangstür des Hauses automatisch gelöscht. Es erscheint dann in dem Buchstabenanzeigefeld 8 wieder die Anzeige "Anfangsbuchstabe?".

Der Benutzer der Klingelanläutevorrichtung 1 kann auch auf die Eingabe des Anfangsbuchstabens des Familiennamens des gesuchten Hausbewohners verzichten und statt dessen nur dessen Wohnungsnummer eingeben und dann die Läuttaste drücken.

Die Klingelanläutevorrichtung 1 erlaubt es auch, daß ein Hausbewohner für den Fall seiner Abwesenheit dem Besucher bzw. Benutzer der Vorrichtung 1 eine Nachricht übermittelt. Beispielsweise kann in einem solchen Fall nach dem Drücken der Läuttaste durch den Besucher in dem Buchstabenanzeigefeld 8 der Text "Bin unter der Telefonnummer ..... zu erreichen" angezeigt werden. Dies geschieht dadurch, daß dem Hausbewohner ein persönlicher, dreistelliger Code zugeordnet wird. Der Hausbewohner kann dann an der Klingelanläutevorrichtung 1 nach Wählen seines eigenen Namens und Drücken einer Codetaste in der Funktionstastatur 6 sowie Eingabe seines persönlichen Codes, der automatisch auf Richtigkeit überprüft wird, eine maximal achtzigstellige Kurzinformation eingeben. Der spätere Benutzer der Klingelanläutevorrichtung 1 erhält diese Kurzinformation nach dem Suchen des zugehörigen Namens oder der Wohnungsnummer und Drücken der Läuttaste.

Für den Fall, daß die Klingelanläutevorrichtung 1 mit dem Codekartenleser 20 ausgerüstet ist, kann der Hausbewohner nach dem Einstecken seiner Codekarte in den Einsteckschlitz des Codekartenlesers 20 in der Frontplatte 2 der Vorrichtung 1 sowie nach Eingabe des persönlichen Codes über eine der Tastaturen den elektrischen Öffner der Eingangstür des Hauses betätigen.

D 4-2 EU

Dierauf Industrie Elektronik GmbH
Böttgerstraße 4
8600 Bamberg

Klingelanläutevorrichtung

Patentansprüche

1. Klingelanläutevorrichtung (1) mit Tasten, gekennzeichnet durch
   a) eine alphabetische Tastatur (4),
   b) eine numerische Tastatur (5),
   c) eine Funktionstastatur (6),
   d) ein Buchstabenanzeigefeld (8),
   e) ein Nummernanzeigefeld (9),
   f) einen elektronischen Namensspeicher (19) und
   g) eine elektronische Steuervorrichtung (20).

2. Klingelanläutevorrichtung (1) nach Anspruch 1, gekennzeichnet durch einen Schlüsselschalter (12) zur Freigabe oder Blockierung des Namensspeichers (19).

3. Klingelanläutevorrichtung (1) nach Anspruch 1 oder 2,
   gekennzeichnet durch einen zusätzlichen Codekartenleser
   (20).

4. Klingelanläutevorrichtung (1) nach einem der Ansprüche
   1 bis 3, gekennzeichnet durch eine zusätzliche Einheit
   einer Gegen- oder Wechselsprechvorrichtung (21).

- 1 -

SIEBERTSTR. 4 · 8000 MÜNCHEN 86 · POB 860340 · KABEL: RHEINPATENT · TEL. (089) 471079 · TELEX 5 2205

1/1

Fig. 1

Fig. 2